(19) Europäisches Patentamt / European Patent Office / Office européen des brevets

(11) **EP 3 895 024 B1**

(12) **EUROPEAN PATENT SPECIFICATION**

(45) Date of publication and mention
of the grant of the patent:
**06.05.2026 Bulletin 2026/19**

(21) Application number: **18834036.8**

(22) Date of filing: **12.12.2018**

(51) International Patent Classification (IPC):
$G06F\ 12/02$ (2006.01)   $G06F\ 12/06$ (2006.01)
$G06F\ 12/08$ (2016.01)   $G06N\ 3/063$ (2023.01)
$G06N\ 3/0464$ (2023.01)   $G06N\ 3/044$ (2023.01)

(52) Cooperative Patent Classification (CPC):
**G06N 3/063; G06F 12/0284; G06F 12/06;**
**G06F 12/08;** G06F 2212/1024; G06F 2212/502;
G06N 3/044; G06N 3/0464

(86) International application number:
**PCT/IB2018/059944**

(87) International publication number:
**WO 2020/121030 (18.06.2020 Gazette 2020/25)**

(54) **CACHING DATA IN ARTIFICIAL NEURAL NETWORK COMPUTATIONS**

DATENZWISCHENSPEICHERUNG IN KÜNSTLICHEN NEURONALEN
NETZWERKBERECHNUNGEN

MISE EN MÉMOIRE CACHE DE DONNÉES DANS DES CALCULS DE RÉSEAU NEURONAL
ARTIFICIEL

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**20.10.2021 Bulletin 2021/42**

(73) Proprietor: **Xilinx, Inc.**
**San Jose, CA 95124 (US)**

(72) Inventors:
• **DELERSE, Sebastien**
**91120 Palaiseau (FR)**

• **DE VANGEL, Benoit Chappet**
**91120 Palaiseau (FR)**
• **CAGNAC, Thomas**
**91120 Palaiseau (FR)**

(74) Representative: **Knöner, Gregor et al**
**Kahler Käck Mollekopf**
**Partnerschaft von Patentanwälten mbB**
**Iglinger Straße 27**
**86899 Landsberg/Lech (DE)**

(56) References cited:
**US-A1- 2005 262 323**   **US-A1- 2013 238 855**

## Description

## TECHNICAL FIELD

The present disclosure relates generally to data processing and, more particularly, to system and method for caching data in artificial neural network (ANN) computations.

## BACKGROUND

Artificial Neural Networks (ANNs) are simplified and reduced models reproducing behavior of human brain. The human brain contains 10-20 billion neurons connected through synapses. Electrical and chemical messages are passed from neurons to neurons based on input information and their resistance to passing information. In the ANNs, a neuron can be represented by a node performing a simple operation of addition coupled with a saturation function. A synapse can be represented by a connection between two nodes. Each of the connections can be associated with an operation of a multiplication by a constant. The ANNs are particularly useful for solving problems that cannot be easily solved by classical computer programs.

While forms of the ANNs may vary, they all have the same basic elements similar to the human brain. A typical ANN can be organized into layers, each of the layers may include many neurons sharing similar functionality. The inputs of a layer may come from a previous layer, multiple previous layers, any other layers or even the layer itself. Major architectures of ANNs include Convolutional Neural Network (CNN), Recurrent Neural Network (RNN) and Long Term Short Memory (LTSM) network, but other architectures of ANN can be developed for specific applications. While some operations have a natural sequence, for example a layer depending on previous layers, most of the operations can be carried out in parallel within the same layer. The ANNs can then be computed in parallel on many different computing elements similar to neurons of the brain. A single ANN may have hundreds of layers. Each of the layers can involve millions of connections. Thus, a single ANN may potentially require billions of simple operations like multiplications and additions.

Because of the larger number of operations and their parallel nature, ANNs can result in a very heavy load for processing units (e.g., CPU), even ones running at high rates. Sometimes, to overcome limitations of CPUs, graphics processing units (GPUs) can be used to process large ANNs because GPUs have a much higher throughput capacity of operations in comparison to CPUs. Because this approach solves, at least partially, the throughput limitation problem, GPUs appear to be more efficient in the computations of ANNs than the CPUs. However, GPUs are not well suited to the computations of ANNs because the GPUs have been specifically designed to compute graphical images.

The GPUs may provide a certain level of parallelism in computations. However, the GPUs are constraining the computations in long pipes, which results in latency and lack of reactivity. To deliver the maximum throughput, very large GPUs can be used which may involve excessive power consumption, a typical issue of GPUs. Since the GPUs may require more power consumption for the computations of ANNs, the deployment of GPUs can be difficult.

To summarize, CPUs provide a very generic engine that can execute very few sequences of instructions with a minimum effort in terms of programming, but lack the power of computing required for ANNs. GPUs are slightly more parallel and require a larger effort of programming than CPUs, which can be hidden behind libraries with some performance costs, but are not very well suitable for ANNs.

Field Programmable Gate Arrays (FPGAs) are professional components that can be programmed at the hardware level after they are manufactured. The FPGAs can be configured to perform computations in parallel. Therefore, FPGAs can be well suited to compute ANNs. Programming of FPGAs, however, is challenging, requiring a much larger effort than programming CPUs and GPUs. Thus, adaption of FPGAs to perform ANN computations can be more challenging than for CPUs and GPUs.

Most attempts in programming FPGAs to compute ANNs have been focusing on a specific ANN or a subset of ANNs, or required to modify the ANN structure to fit into a specific limited accelerator, or provided a basic functionality without solving the problem of computing ANN on FPGAs globally. The computation scale is typically not taken into account by existing FPGA solutions, many of the research being limited to a single or few computation engines, which could be replicated. Furthermore, the existing FPGA solutions do not solve the problem of massive data movement required at a large scale for the actual ANN involved in real industrial applications.

The inputs computed with an ANN are typically provided by an artificial intelligence (AI) framework. Those programs are used by the AI community to develop new ANN or global solutions based on ANN. However, FPGAs typically lack integration with AI frameworks.

The document US 2005/0262323 A1 describes a memory system that employs group levelization, wherein different latencies are enabled for different groups of physical memory, thereby reducing the average access latency of the memory system.

The document US 2013/0238855 A1 describes management of cache memory, wherein in a system employing storage virtualization, data units are addressed in the cache memory by their storage physical address.

## SUMMARY

The invention is set forth in the independent claims and further embodiments are defined in the dependent claims.

Provided are computer-implemented systems and methods for caching data in ANN computations.

According to an embodiment of the invention, a system for caching data in artificial neural network (ANN) computations is provided in accordance with independent claim 7.

According to another embodiment of the invention, a method for caching data in artificial neural network (ANN) computations is provided in accordance with independent claim 1.

Additional objects, advantages, and novel features will be set forth in part in the detailed description section of this disclosure, which follows, and in part will become apparent to those skilled in the art upon examination of this specification and the accompanying drawings or may be learned by production or operation of the example embodiments. The objects and advantages of the concepts may be realized and attained by means of the methodologies, instrumentalities, and and combinations, within the scope defined by the appended claims.

## BRIEF DESCRIPTION OF THE DRAWINGS

Embodiments are illustrated by way of example and not limitation in the figures of the accompanying drawings, in which like references indicate similar elements and, in which:

FIG. 1 is a block diagram showing an example system for caching data in ANN computations, according to some example embodiments.

FIG. 2 shows an ANN, neuron, and transfer function, according to an example embodiment.

FIG. 3 is a flow chart showing training and inference of an ANN, according to some example embodiments.

FIG. 4 is a block diagram showing a system for caching data in ANN computations, according to an example embodiment.

FIG. 5 is a block diagram showing an ANN, according to example embodiment.

FIG. 6 is a plot showing times for reusing data in ANN computations, according to an example embodiment.

FIG. 7 is a plot showing bandwidth of writing data to two memories with different access speeds, according to an example embodiment.

FIG. 8 is a flow chart showing steps of a method for caching data in ANN computations, according to some example embodiments.

FIG. 9 shows a computing system that can be used to implement embodiments of the disclosed technology.

## DETAILED DESCRIPTION

The following detailed description includes references to the accompanying drawings, which form a part of the detailed description. The drawings show illustrations in accordance with exemplary embodiments. These exemplary embodiments, which are also referred to herein as "examples," are described in enough detail to enable those skilled in the art to practice the present subject matter. The embodiments can be combined, other embodiments can be utilized, or structural, logical, and electrical changes can be made, limited by the scope of the appended claims. The following detailed description is, therefore, not to be taken in a limiting sense, and the scope is defined by the appended claims.

For purposes of this document, the terms "or" and "and" shall mean "and/or" unless stated otherwise or clearly intended otherwise by the context of their use. The term "a" shall mean "one or more" unless stated otherwise or where the use of "one or more" is clearly inappropriate. The terms "comprise," "comprising," "include," and "including" are interchangeable and not intended to be limiting. For example, the term "including" shall be interpreted to mean "including, but not limited to."

Embodiments of this disclosure are directed to methods and systems for caching data in ANN computations. Embodiments of the present disclosure may facilitate storing input values, weights, and other data associated with ANN computations in a plurality of memories of different type, sizes, access speeds, read speeds, write speeds, latencies, and other characteristics. According to the invention, at least two physical memories associated with at least one of different access speeds, read speeds, write speeds, and latencies for the operation are provided. The data can be assigned priorities based on their frequency of use and times for reuse in ANN computations after being written to the memories. Frequently used data can be assigned higher priority. The higher priority data can be stored in a faster memory and lower priority data can be stored in a slower memory.

While some embodiments of the present disclosure are described herein in reference to operations of FPGAs, the present technology may be also practiced with application-specific integrated circuits (ASICs), programmable logic devices, transistor-based circuits, or various combinations thereof. The methods described herein can be also implemented by hardware modules, software modules, or combinations of both. The methods can also be embodied in computer-readable instructions stored on computer-readable media.

The term "module" shall be construed to mean a hardware device, software, or a combination of both. For example, a hardware-based module can use one or more microprocessors, FPGAs, application-specific integrated circuits (ASICs), programmable logic devices, transistor-based circuits, or various combinations thereof. Software-based modules can constitute computer programs, computer program procedures, computer program functions, and the like. In addition, a module of a system can be implemented by a computer or server, or by multiple computers or servers interconnected into a network. Alternatively, a module may also refer to a subpart of a computer system, a hardware device, an integrated circuit, or a computer program.

Technical effects of certain embodiments of the present disclosure can include enhancing memory allocation in integrated circuits, FPGAs, or computer systems configured to perform ANN computations. Further technical effects of certain embodiments of the present disclosure can allow increasing speeds for writing data and speeds for reading the data in the ANN computations, thereby accelerating the ANN computations.

Referring now to the drawings, exemplary embodiments are described. The drawings are schematic illustrations of idealized example embodiments. Thus, the example embodiments discussed herein should not be construed as limited to the particular illustrations presented herein, rather these example embodiments can include deviations and differ from the illustrations presented herein.

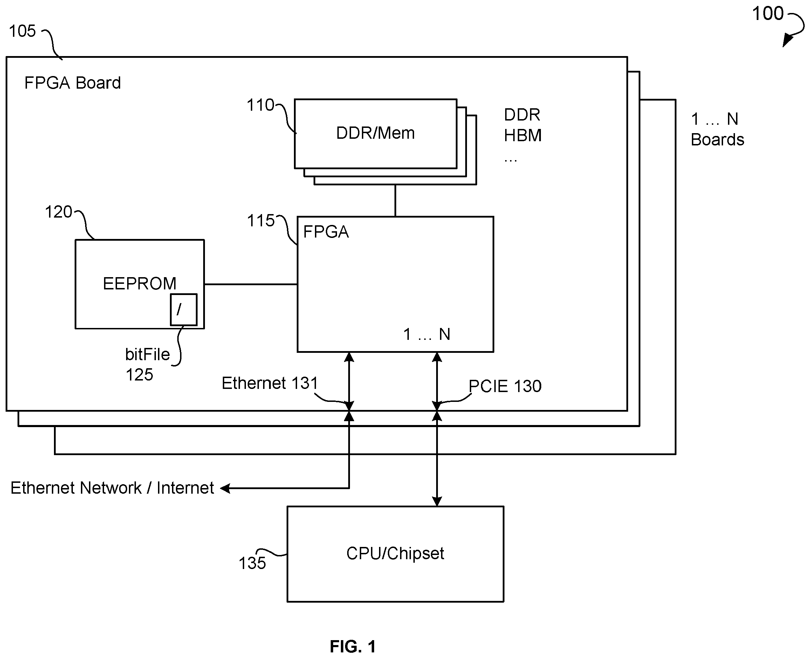

FIG. 1 is a block diagram showing an example system 100 for caching data in ANN computations, according to some example embodiments. The system 100 can be part of a computing system, such as a personal computer, a server, a cloud-based computing recourse, and the like. The system 100 may include one or more FPGA boards 105 and a chipset 135 including at least one CPU. The chipset 135 can be communicatively connected to the FPGA boards 105 via a communication interface. The communication interface may include a Peripheral Component Interconnect Express (PCIE) standard 130. The communication interface may also include an Ethernet connection 131.

The FPGA board 105 may include an FPGA 115, a volatile memory 110, and a non-volatile memory 120. The volatile memory 110 may include a double data rate synchronous dynamic random-access memory (DDR SDRAM), High Bandwidth Memory (HBM), High Bandwidth Cache (HBC), graphics DDR SDRAM, or any other type of memory. The volatile memory 110 may include the host memory. The non-volatile memory 120 may include Electrically Erasable Programmable Read-Only Memory (EEROM), a solid-state drive (SSD), a flash memory, and so forth.

The FPGA 115 can include blocks. The blocks may include a set of elementary nodes (also referred to as gates) performing basic hardware operations, such as Boolean operations. The blocks may further include registers retaining bit information, one or more memory storage of different sizes, and one or more digital signal processors (DSPs) to perform arithmetic computations, for example, additions and multiplications. Programming FPGA 115 may include configuring each of the blocks to have an expected behavior and connecting the blocks by routing information between the blocks. Programming FPGA 115 can be carried out using a result from a compiler taken as an input schematic description, gate-level description, hardware languages like Verilog, System Verilog, or Very High Speed Integrated Circuit Hardware Description Language (VHDL), or any combination of thereof.

The non-volatile memory 120 can be configured to store instructions in a form of bit file 125 to be executed by the FPGA 115. The FPGA 115 can be configured by the instructions to perform one or more floating point operations including multiplication and addition to calculate a sum of products that can be used in neural network computations.

The volatile memory 110 can be configured to store weights W[i] for neurons of one or more ANNs, input values V[i] to be processed for the ANNs, and results of ANNs computation including any intermediate results of computations of layers of the ANNs.

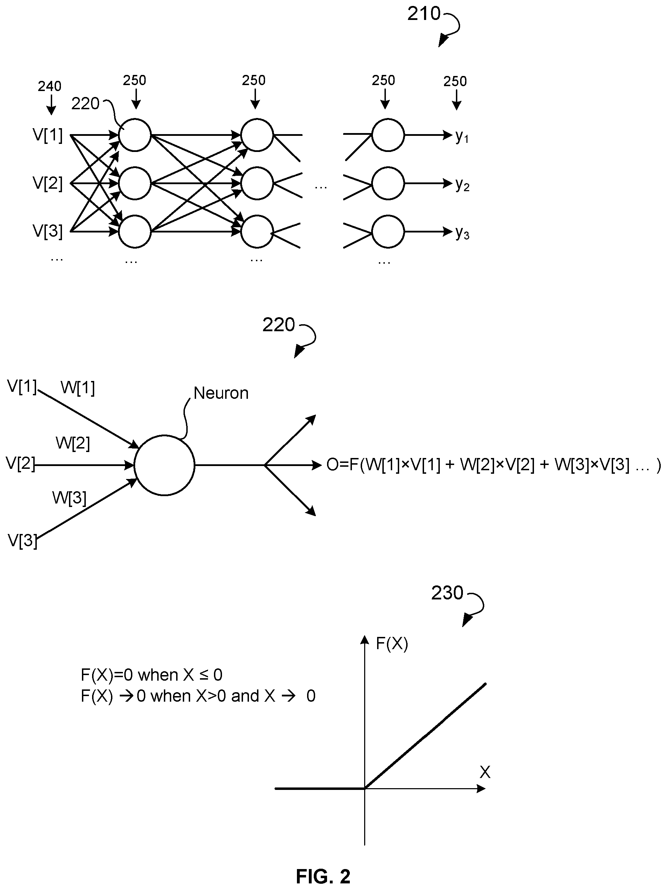

FIG. 2 shows ANN 210, neuron 220, and transfer function 230, according to some example embodiments. The ANN 210 may include one or more input layers 240, one or more hidden layers 250, and one or more output layers 260. Each of the input layers, hidden layers, and output layers may include one or more (artificial) neurons 220. The number of neurons can be different for different layers.

Each of neurons 220 may be represented by a calculation of a mathematical function

$$ O = F\left(\sum_{i=1}^{n} V[i] \times W[i]\right) \quad (1) $$

wherein V[i] are neuron input values, W[i] are weights assigned to input values at the neuron, and F(X) is a transfer function. Typically, the transfer function 230 F(X) is selected to be zero for X < 0 and have a limit of zero as X approaches zero. For example, the transfer function F(X) can be in the form of a sigmoid. The result of the calculation of a neuron propagates as an input value of further neurons in the ANN. The further neurons can belong to either the next layer, previous layer or the same layer.

It should be noted that while the ANN 210 illustrated in FIG. 2 can be referred to as a feedforward neural network, embodiments of the present disclosure can be also used in computations of convolution neural networks, recurrent neural networks, long short-term memory networks, and other types of ANNs.

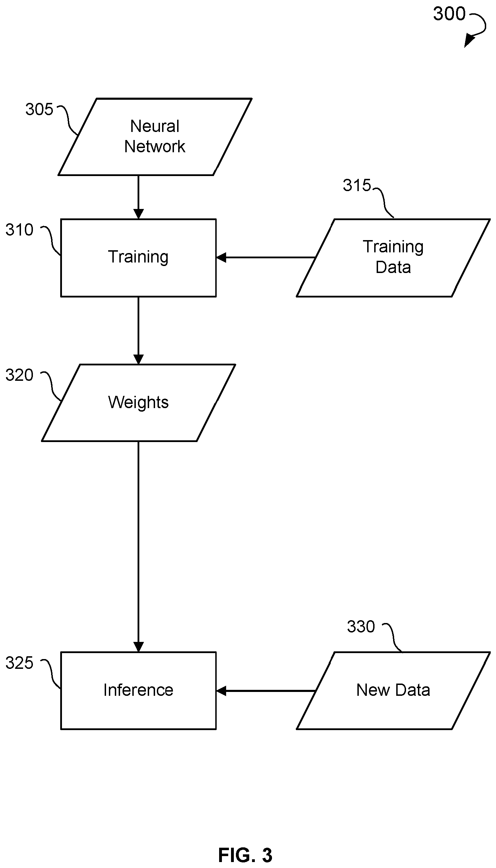

FIG. 3 is a flow chart showing training 310 and inference 325 of an ANN, according to some example embodiments. The training 310 (also known as learning) is a process of teaching ANN 305 to output a proper result based on a given set of training data 315. The process of training may include determining weights 320 of neurons of the ANN 305 based on training data 315. The training data 315 may include samples. Each sample may be represented as a pair of input values and expected output. The training data 315 may include hundreds to millions of samples. While training 310 is required to be performed only once, it may require a significant amount of computations and take a considerable time.

The ANNs can be configured to solve different tasks including, for example, image recognition, speech recognition, handwriting recognition, machine translation, social network filtering, video games, medical diagnosis, and so forth.

The inference 325 is a process of computation of an ANN. The inference 325 uses the trained ANN weights 320 and new data 330 including new sets of input values. For each new set of input values, the computation of the ANN provides a new output which answer the problem that the ANN is supposed to solve. For example, an ANN can be trained to recognize various animals in images. Correspondingly, the ANN can be trained using millions of images of animals. Submitting a new image to the ANN would provide the information for animals in the new image (this process being known as image tagging). While the inference for each image takes fewer computations than training, number of inferences can be large because new images can be received from billions of sources.

The inference 325 includes multiple computations of sum of the following products:

$$\sum_{i=1}^{n} V[i] \times W[i] \ (2)$$

wherein the V[i] are new input values and W[i] are weights associated with neurons of the ANN.

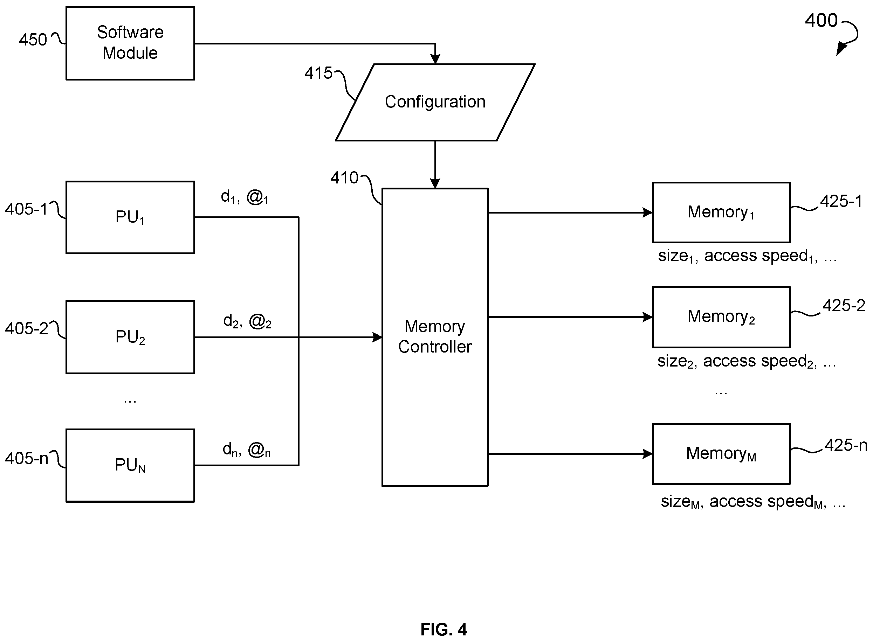

FIG. 4 is a block diagram showing a system 400 for caching data in ANN computations, according to some example embodiments. The system 400 may include one or more processing units 405-i (i=1, ..., N), one or more memory controller 410, and a plurality of memories 425-i (i=1,..., M). The memories 425-i (i=1,..., M) may include, but not limited to flash memory, solid state drive, hard disk drive, HBM, DDR, HBC, and Graphics DDR SDRAM. The memories may include different sizes, access speeds, write speeds, read speeds, and latencies. Typically, in computing systems, memories with higher access speeds have smaller sizes and memories with slower access speed have larger sizes. The memories with higher access speeds and of smaller sizes can be tightly integrated with the memory controller 410 on the same integrated circuit. Larger size memories with lower access speeds (or larger latencies) can be located externally on an integrated circuit where the memory controller is located. Each of the memories can be associated with one or more physical addresses.

The processing units 405-i (i=1, ..., N) may be configured to provide data $d_1, d_2, ..., d_n, ...$ related to an ANN to the memory controller 410. The data $d_1, d_2, ..., d_n, ...$ may include, for example, input values for neurons of one or more layers of the ANN, output values of neurons of one or more layers of the ANN, and weights assigned to input values at the neurons.

The data $d_1, d_2, ..., d_n, ...$ is associated with the logical addresses $@_1, @_2, ..., @_n, ....$ The logical address $@_1, @_2, ..., @_n, ...$ is indicative of a neuron, layer, type of data (for example, input values, output values, weights, and so on). In one example embodiment, the memory controller 410 may determine, based on a logical address of data, priority of the data. The memory controller 410 may further select, based on the priority, a memory from the plurality of the memories and a physical address associated with the memory. The memory controller 410 further performs an operation involving the data and the physical address. For example, the memory controller writes the data to the physical address of the selected memory. The memory controller 410 is configured using a configuration 415. The configuration 415 may include information concerning sizes and access speeds of memories 425-i (i=1,..., M). The configuration 415 may further include information concerning priorities of the memories 425-i (i=1, ..., M). The priorities of the memories can be based on sizes and access speeds of the memories. For example, a priority of a memory can be determined based on a time lapse between a time the data is written to the memory and a time the data is used in the ANN computation. The configuration 415 may also include rules for mapping the logical addresses $@_1, @_2, ..., @_n, ...$ to priorities for selecting memories.

In another example embodiment, the memory controller 410 can be configured to select memory from the plurality of memories 425-i (i=1, ..., M) based on a logical address associated with the data. The configuration 415 includes rules for mapping logical addresses $@_1, @_2, ..., @_n, ...$ to the memories 425-i (i=1, ..., M).

The configuration 415 is determined based on the structure of an ANN by a software module 450. The software module 450 can be configured to assign a logical address to weights, input values, and outputs values of each layer in the ANN.

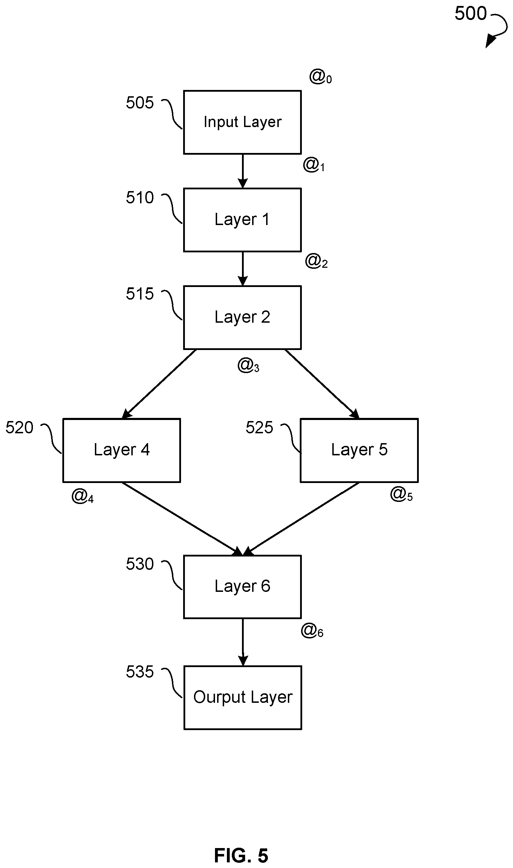

FIG. 5 shows an example ANN 500. The ANN 500 includes an input layer 505, hidden layers 510, 515, 520, 525, 530, and output layer 535. In example of FIG. 5, input values for input layer 505 can be assigned to logical addresses $@_0$. Output values of input layer 505 can be assigned to the logical addresses $@_1$. The output values of the input layer 505 are input values for hidden layer 510. Therefore, logical addresses $@_1$ can be also used for the input values of the hidden layer 510. Similarly, output values of layers 515, 520, 525, and 530 can be assigned to logical address $@_3, @_4, @_5,$ and $@_6$ respectively. The logical addresses $@_3$ can be also used for input values for layers 520 and 530. The logical addresses $@_4$ and $@_5$ can be also used for input values of layer 530. The logical addresses $@_6$ can be used for input values of output layer 535.

The software module 450 may determine priorities for data $d_i$ associated with logical addresses $@_i$ (i=0, 1, ..., n, ...) using the following parameters:

1) a bandwidth of a layer for which the data diused as input values. The bandwidth can be determined as amount of data that can be processed by layer per a time period.

2) a list of data previously written to the memories 425-i (i=1, ..., M) and kept in memories. In example of FIG. 5, output values associated with logical address $@_3$ should be kept in memory until both layer 520 and layer 525 are processed.

3) available sizes of the memories 425-i (i=1, ..., M).

The software module 450 can analyze data flow in an ANN to determine lapses between times at which data are written to the memories 425-i (i=1, ..., M) and times at which data are reused in ANN computations.

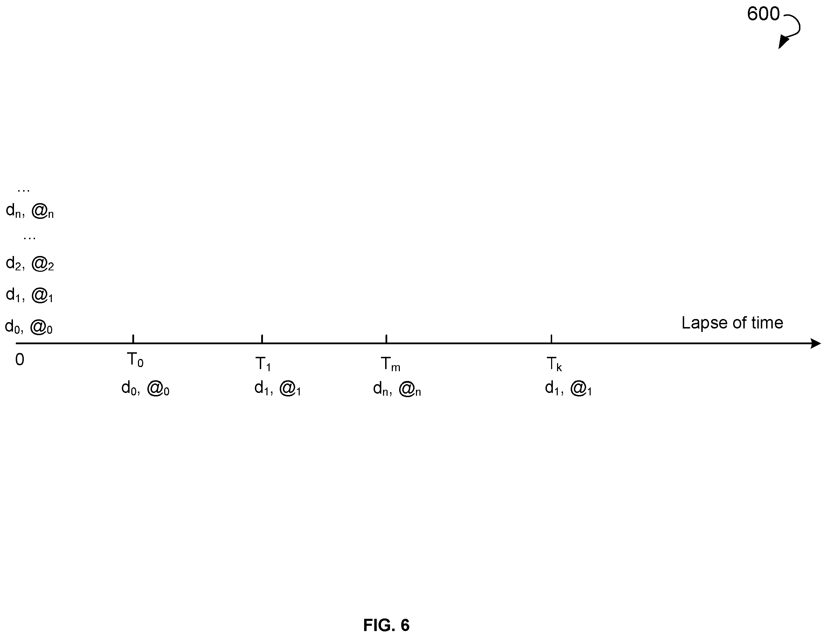

FIG. 6 is plot 600 showing lapse times for acquiring data timed in ANN calculations, according to an example embodiment. In the example of FIG. 6, the data $d_0$ with logical address $@_0$ are read at time $T_0$ after being written to the memories. The data $d_n$ with logical address $@_n$ are reused at time $T_m$ after being written to the memories. The data $d_1$ with logical address $@_1$ are reused at least twice at times $T_1$ and $T_k$ after being written to the memories.

After estimating the lapses of time of reuse of data, the software module 450 may assign a higher priority to the data to be reused in short lapses of time. The data can be assigned a lower priority if the data are reused in a long lapse of time. The software module 450 can assign higher priority to frequently used data. Data that have been used once only or rarely used data can be assigned a lower priority.

In some embodiments, if the data cannot be written to a single memory due to a larger size of the data, the memory controller 410 can be configured to write the data to at least two memories of the plurality of memories. The two memories may differ in access speeds.

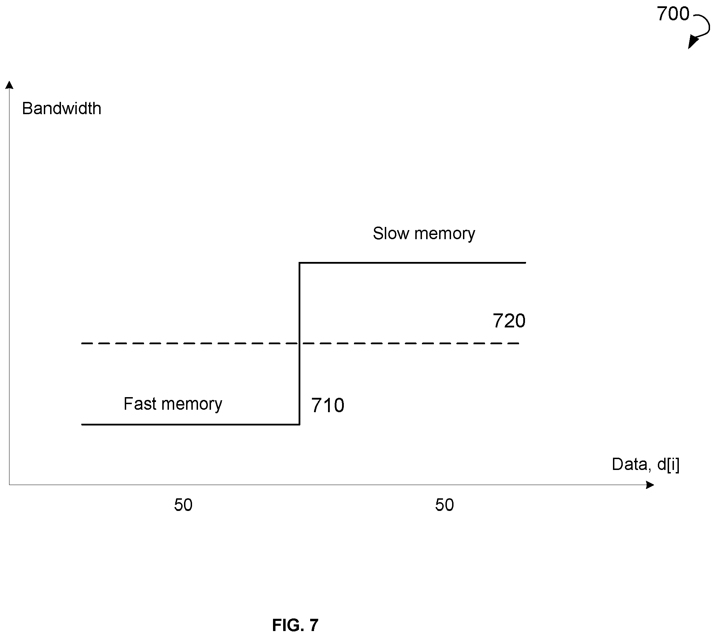

FIG. 7 is a plot showing bandwidths 710 and 720 of writing data d[i] (i=1, ..., N) to a faster memory and a slower memory, according to an example embodiment. Bandwidth 710 corresponds to the case where the first part of the data (d[i], i=1, ..., N/2) is completely written to the faster memory and the second part of data (d[i], i=N/2 +1, ..., N) is completely written to the slower memory. Therefore bandwidth 710 may include a step at point 50%. To smooth the bandwidth of writing data (and bandwidth of reading data from the memories), the memory controller 410 can be configured to write a value d[i] of data to the faster memory and a subsequent value d[i+1] to the slower memory, wherein i=0, 2, 4, ... N-2. In FIG. 7, the smoothed bandwidth is shown as bandwidth 720.

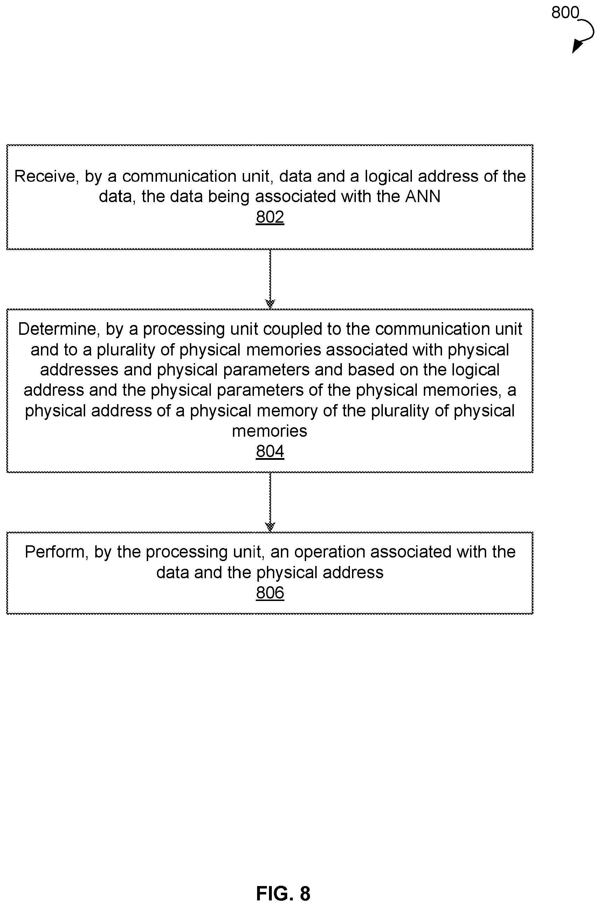

FIG. 8 is a flow chart illustrating a method 800 for caching data in ANN computations, in accordance with some example embodiments. In some embodiments, the operations may be combined, performed in parallel, or performed in a different order. The method 800 may also include additional or fewer operations than those illustrated. The method 800 may be performed by system 400 described above with reference to in FIG. 4.

The method 800 may commence in block 802 with receiving, by a communication unit, data and a logical address of the data, the data being associated with the ANN. The logical address of the data can be indicative of an input of one or more layers of the ANN or a weight of the one or more layers of the ANN.

In block 804, the method 800 may determine, by a processing unit coupled to the communication unit and to a plurality of physical memories and based on the logical address and physical parameters of the physical memories, a physical address of a physical memory of the plurality of physical memories. The plurality of physical memories may include at least two physical memories associated with different physical parameters. The different physical parameters may include different access speeds, different sizes, or different latencies for writing to or reading the data from the physical memories. The determination of the physical address of the physical memory can be based on a usage count of the data in the ANN computation.

The physical memories can be associated with priorities. The priorities can be based on physical parameters associated with the physical memories. A priority of a physical memory of the plurality of physical memories can be determined based on a time lapse between a time the data is written to the physical memory and a time the data is used in the ANN computation. Determining the physical address of the physical memory can include selecting, based on an order of the priorities, the physical memory of the plurality of physical memories.

In block 806, the method 800 may proceed with performing, by the processing unit, an operation associated with the data and the physical address. The operation may include a write to the physical memory at the physical address.

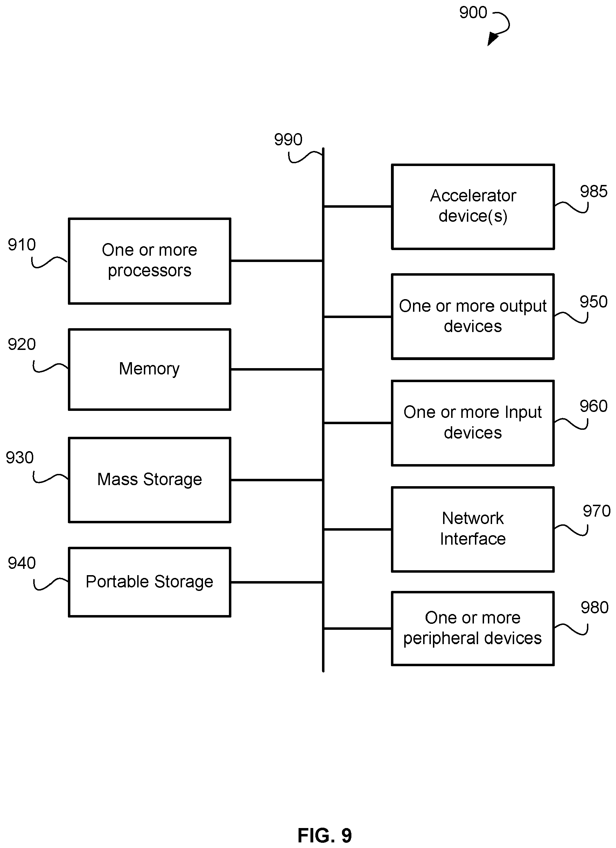

FIG. 9 illustrates an example computing system 900 that may be used to implement embodiments described herein. The example computing system 900 of FIG. 9 may include one or more processors 910 and memory 920. Memory 920 may store, in part, instructions and data for execution by the one or more processors 910. Memory 920 can store the executable code when the exemplary computing system 900 is in operation. The processor 910 may include internal accelerators like a graphical processing unit, a Field Programmable Gate Array, or similar accelerators that may be suitable for use with embodiments described herein. The memory 920 may include internal accelerators like a graphical processing unit, a Field Programmable Gate Array, or similar accelerators that may be suitable for use with embodiments described herein. The example computing system 900 of FIG. 9 may further include a mass storage 930, portable storage 940, one or more output devices 950, one or more input devices 960, a network interface 970, and one or more peripheral devices 980.

The components shown in FIG. 9 are depicted as being connected via a single bus 990. The components may be connected through one or more data transport means. The one or more processors 910 and memory 920 may be connected via a local microprocessor bus, and the mass storage 930, one or more peripheral devices 980, portable storage 940, and network interface 970 may be connected via one or more input/output buses.

Mass storage 930, which may be implemented with a magnetic disk drive, an optical disk drive or a solid state drive, is a non-volatile storage device for storing data and instructions for use by a magnetic disk, an optical disk drive or SSD, which in turn may be used by one or more processors 910. Mass storage 930 can store the system software for implementing embodiments described herein for purposes of loading that software into memory 920. The mass storage 930 may also include internal accelerators like a graphical processing unit, a Field Programmable Gate Array, or similar accelerators that may be suitable for use with embodiments described herein.

Portable storage 940 may operate in conjunction with a portable non-volatile storage medium, such as a compact disk (CD) or digital video disc (DVD), to input and output data and code to and from the computing system 900 of FIG. 9. The system software for implementing embodiments described herein may be stored on such a portable medium and input to the computing system 900 via the portable storage 940.

One or more input devices 960 provide a portion of a user interface. The one or more input devices 960 may include an alphanumeric keypad, such as a keyboard, for inputting alphanumeric and other information, or a pointing device, such as a mouse, a trackball, a stylus, or cursor direction keys. Additionally, the computing system 900 as shown in FIG. 9 includes one or more output devices 950. Suitable one or more output devices 950 include speakers, printers, network interfaces, and monitors.

Network interface 970 can be utilized to communicate with external devices, external computing devices, servers, and networked systems via one or more communications networks such as one or more wired, wireless, or optical networks including, for example, the Internet, intranet, LAN, WAN, cellular phone networks (e.g., Global System for Mobile communications network, packet switching communications network, circuit switching communications network), Bluetooth radio, and an IEEE 802.11-based radio frequency network, among others. Network interface 970 may be a network interface card, such as an Ethernet card, optical transceiver, radio frequency transceiver, or any other type of device that can send and receive information. Other examples of such network interfaces may include Bluetooth®, 3G, 4G, and WiFi® radios in mobile computing devices as well as a USB.

One or more peripheral devices 980 may include any type of computer support device to add additional functionality to the computing system. The one or more peripheral devices 980 may include a modem or a router.

The example computing system 900 of FIG. 9 may also include one or more accelerator devices 985. The accelerator devices 985 may include PCIe-form-factor boards or storage-form-factor boards, or any electronic board equipped with a specific electronic component like a Graphical Processing Unit, a Neural Processing Unit, a Multi-CPU component, a Field Programmable Gate Array component, or similar accelerators electronic or photonic components, that may be suitable for use with embodiments described herein.

The components contained in the exemplary computing system 900 of FIG. 9 are those typically found in computing systems that may be suitable for use with embodiments described herein and are intended to represent a broad category of such computer components that are well known in the art. Thus, the exemplary computing system 900 of FIG. 9 can be a personal computer, hand held computing device, telephone, mobile computing device, workstation, server, minicomputer, mainframe computer, or any other computing device. The computer can also include different bus configurations, networked platforms, multi-processor platforms, and so forth. Various operating systems (OS) can be used including UNIX, Linux, Windows, Macintosh OS, Palm OS, and other suitable operating systems.

Some of the above-described functions may be composed of instructions that are stored on storage media (e.g., computer-readable medium). The instructions may be retrieved and executed by the processor. Some examples of storage media are memory devices, tapes, disks, and the like. The instructions are operational when executed by the processor to direct the processor to operate in accord with the example embodiments. Those skilled in the art are familiar with instructions, processor(s), and storage media.

It is noteworthy that any hardware platform suitable for performing the processing described herein is suitable for use with the example embodiments. The terms "computer-readable storage medium" and "computer-readable storage media" as used herein refer to any medium or media that participate in providing instructions to a CPU for execution. Such media can take many forms, including, but not limited to, non-volatile media, volatile media, and transmission media. Non-volatile media include, for example, optical or magnetic disks, such as a fixed disk. Volatile media include dynamic memory, such as RAM. Transmission media include coaxial cables, copper wire, and fiber optics, among others, including the wires that include one embodiment of a bus. Transmission media can also take the form of acoustic or light waves, such as those generated during radio frequency and infrared data communications. Common forms of computer-readable media include, for example, a floppy disk, a flexible disk, a hard disk, magnetic tape, any other magnetic medium, SSD, a CD-read-only memory (ROM) disk, DVD, any other optical medium, any other physical medium with patterns of marks or holes, a RAM, a PROM, an EPROM, an EEPROM, a FLASHEPROM, any other memory chip or cartridge, a carrier wave, or any other medium from which a computer can read.

Various forms of computer-readable media may be involved in carrying one or more sequences of one or more instructions to a CPU for execution. A bus carries the data to system RAM, from which a CPU retrieves and executes the instructions. The instructions received by system RAM can optionally be stored on a fixed disk either before or after execution by a CPU. The instructions or data may not be used by the CPU but be accessed in writing or reading from the other devices without having the CPU directing them.

Thus, systems and methods for caching data in ANN computations have been described. Although embodiments have been described with reference to specific exemplary embodiments, it will be evident that various modifications and changes can be made to these exemplary embodiments, with the scope limited by the appended claims. Accordingly, the specification and drawings are to be regarded in an illustrative rather than a restrictive sense.

## Claims

1. A method for caching data in artificial neural network, ANN, computations, the method comprising:

   receiving, by a communication unit, data and a logical address of the data, the data being associated with the ANN (500),
   wherein the logical address of the data is indicative of a neuron, a layer of the ANN, an input of one or more layers (505-535) of the ANN (500) or a weight of the one or more layers (505-535) of the ANN (500);
   determining, by a processing unit (410) coupled to the communication unit and to a plurality of physical memories (425) and based on the logical address and physical parameters of the physical memories (425), a physical address of a physical memory of the plurality of physical memories (425),
   wherein the plurality of physical memories (425) includes at least two physical memories associated with different physical parameters, the different physical parameters including one of: different access speeds, different read speeds, different write speeds, and different latencies for the operation,
   wherein the processing unit (410) is configured with a configuration (415) including rules for mapping the logical addresses to the physical memories (425), wherein the configuration (415) of the processing unit (410) is determined based on a structure of the ANN; and
   performing, by the processing unit (410), an operation associated with the data and the physical address
   wherein the operation includes a write of the data to the physical memory at the physical address.

2. The method of claim 1, wherein the determination of the physical address of the physical memory (425) is based on a usage count of the data in the ANN computation.

3. The method of any of the preceding claims, wherein:

   the physical memories (425) are associated with priorities, the priorities being based on physical parameters associated with the physical memories (425); and
   the processing unit (410) is configured to select, based on an order of the priorities, the physical memory from the plurality of physical memories (425), the physical memory being selected to perform the operation.

4. The method of claim 3, wherein a priority of the physical memory of the plurality of physical memories (425) is determined based on a time lapse between a time the data is written to the physical memory and a time the data is used in the ANN computation.

5. The method of claim 3 or 4, wherein the data include a sequence of inputs and the processing unit (410) is configured to:

   determine that a size of the data exceeds a size of the selected physical memory; and
   in response to the determination:

   select a further physical memory from the plurality of memories (425), the further physical memory being associated with a further priority, the further priority being lower than a priority of the selected physical memory; and
   write the inputs from the sequence to the selected physical memory and to the further physical memory.

6. The method of any of claims 3-5, wherein the configuration (415) includes information related to mapping the data associated with one or more layers (505-535) of the ANN (500) to the priorities.

7. A system for caching data in artificial neural network, ANN, computations, the system comprising:

a communication unit configured to receive data and a logical address of the data, the data being associated with the ANN (500);

a plurality of physical memories (425), the physical memories (425) being associated with physical addresses and physical parameters, wherein the plurality of physical memories (425) includes at least two physical memories associated with different physical parameters, the different physical parameters including one of:

different access speeds, different read speeds, different write speeds, and different latencies for the operation; and

a processing unit (410) coupled to the communication unit and to the plurality of physical memories (425),

wherein the system (400) is configured to perform the method of any of claims 1-6.

8. The system of claim 7, wherein the processing unit (410) resides in one of: a field- programmable gate array or an application-specific integrated circuit.

9. The system of claim 8, wherein the plurality of physical memories (425) includes a memory integrated with the processing unit (410).

10. The system of claim 8 or 9, wherein the plurality of physical memories (425) includes a memory storage external to the processing unit (410).

11. The system of any of claims 8-10, wherein a bit of the physical address is used as a control of the physical memory, the physical memory receiving or providing the data associated with an ANN (500), or wherein a bit of the physical address is used as a selector of a type of a multiplexer, wherein an input or an output of the multiplexer includes a bit of the data associated with an ANN (500).

12. The system of any of claims 7-11, wherein the determination of the physical address of the physical memory by the processing unit (410) is based on one of: a usage count of the data in the ANN computation or a time lapse between a time the data is written to the physical memory and a time the data is used in the ANN computation.

13. A computer program for caching data in artificial neural network, ANN, computations, wherein the computer program comprises control instructions which, when executed by one or more processors (910) of a computing system (900) which implements a communication unit and a processing unit (410) coupled to the communication unit, cause the one or more processors (910) to perform any of the methods according to claims 1-6.

**Patentansprüche**

1. Ein Verfahren zum Zwischenspeichern von Daten in Berechnungen eines künstlichen neuronalen Netzwerks, ANN, wobei das Verfahren umfasst:

Empfangen von Daten und einer logischen Adresse der Daten durch eine Kommunikationseinheit, wobei die Daten dem ANN (500) zugeordnet sind,

wobei die logische Adresse der Daten ein Neuron, eine Schicht des ANN, eine Eingabe einer oder mehrerer Schichten (505-535) des ANN (500) oder eine Gewichtung der einen oder mehreren Schichten (505-535) des ANN (500) bezeichnet;

Bestimmen, durch eine Verarbeitungseinheit (410), die mit der Kommunikationseinheit und einer Vielzahl von physischen Speichern (425) gekoppelt ist, und basierend auf der logischen Adresse und den physischen Parametern der physischen Speicher (425), einer physischen Adresse eines physischen Speichers der Vielzahl von physischen Speichern (425),

wobei die Vielzahl physischer Speicher (425) mindestens zwei physische Speicher aufweist, die unterschiedlichen physischen Parametern zugeordnet sind, wobei die unterschiedlichen physischen Parameter eines der folgenden Elemente aufweisen: unterschiedliche Zugriffsgeschwindigkeiten, unterschiedliche Lesegeschwindigkeiten, unterschiedliche Schreibgeschwindigkeiten und unterschiedliche Latenzen für den Betrieb,

wobei die Verarbeitungseinheit (410) mit einer Konfiguration (415) konfiguriert ist, die Regeln zum Zuordnen der logischen Adressen zu den physischen Speichern (425) aufweist, wobei die Konfiguration (415) der Verarbeitungseinheit (410) basierend auf einer Struktur des ANN bestimmt wird; und

Durchführen einer Operation durch die Verarbeitungseinheit (410), der den Daten und der physischen Adresse zugeordnet ist,

wobei die Operation ein Schreiben der Daten in den physischen Speicher an der physischen Adresse aufweist.

2. Das Verfahren nach Anspruch 1, wobei die Bestimmung der physischen Adresse des physischen Speichers (425) auf einer Nutzungszählung der Daten in der ANN-Berechnung basiert.

3. Das Verfahren nach einem der vorhergehenden Ansprüche, wobei:

die physischen Speicher (425) Prioritäten zugeordnet sind, wobei die Prioritäten auf physischen Parametern basieren, die den physischen Speichern (425) zugeordnet sind; und
die Verarbeitungseinheit (410) konfiguriert ist, um basierend auf einer Reihenfolge der Prioritäten den physischen Speicher aus der Vielzahl von physischen Speichern (425) auszuwählen, wobei der physische Speicher ausgewählt wird, um die Operation auszuführen.

4. Das Verfahren nach Anspruch 3, wobei eine Priorität des physischen Speichers der Vielzahl von physischen Speichern (425) basierend auf einer Zeitspanne zwischen einem Zeitpunkt, zu dem die Daten in den physischen Speicher geschrieben werden, und einem Zeitpunkt, zu dem die Daten in der ANN-Berechnung verwendet werden, bestimmt wird.

5. Das Verfahren nach Anspruch 3 oder 4, wobei die Daten eine Reihenfolge von Eingaben aufweisen und die Verarbeitungseinheit (410) konfiguriert ist, um:

    zu bestimmen, dass eine Größe der Daten eine Größe des ausgewählten physischen Speichers überschreitet; und
    als Reaktion auf die Bestimmung:

        einen weiteren physischen Speicher aus der Vielzahl von Speichern (425) auszuwählen, wobei der weitere physische Speicher einer weiteren Priorität zugeordnet ist, wobei die weitere Priorität niedriger ist als eine Priorität des ausgewählten physischen Speichers; und
        die Eingaben aus der Reihenfolge in den ausgewählten physischen Speicher und in den weiteren physischen Speicher zu schreiben.

6. Das Verfahren nach einem der Ansprüche 3 bis 5, wobei die Konfiguration (415) Informationen aufweist, die sich auf ein Zuordnen der Daten, die einer oder mehreren Schichten (505 bis 535) des ANN (500) zugeordnet sind, zu den Prioritäten beziehen.

7. Ein System zum Zwischenspeichern von Daten in Berechnungen eines künstlichen neuronalen Netzwerks, ANN, wobei das System umfasst:

    eine Kommunikationseinheit, die konfiguriert ist, um Daten und eine logische Adresse der Daten zu empfangen, wobei die Daten dem ANN (500) zugeordnet sind;
    eine Vielzahl von physischen Speichern (425), wobei die physischen Speicher (425) physischen Adressen und physischen Parametern zugeordnet sind, wobei die Vielzahl von physischen Speichern (425) mindestens zwei physische Speicher aufweist, die unterschiedlichen physischen Parametern zugeordnet sind, wobei die unterschiedlichen physischen Parameter eines der folgenden Elemente aufweisen: unterschiedliche Zugriffsgeschwindigkeiten, unterschiedliche Lesegeschwindigkeiten, unterschiedliche Schreibgeschwindigkeiten und unterschiedliche Latenzen für den Betrieb; und
    eine Verarbeitungseinheit (410), die mit der Kommunikationseinheit und der Vielzahl physischer Speicher (425) gekoppelt ist,
    wobei das System (400) konfiguriert ist, um das Verfahren nach einem der Ansprüche 1 bis 6 durchzuführen.

8. Das System nach Anspruch 7, wobei sich die Verarbeitungseinheit (410) in einem der folgenden Elemente befindet: einem feldprogrammierbaren Gate-Array oder einer anwendungsspezifischen integrierten Schaltung.

9. Das System nach Anspruch 8, wobei die Vielzahl physischer Speicher (425) einen mit der Verarbeitungseinheit (410) integrierten Speicher aufweist.

10. Das System nach Anspruch 8 oder 9, wobei die Vielzahl physischer Speicher (425) einen außerhalb der Verarbeitungseinheit (410) befindlichen Speicher aufweist.

11. Das System nach einem der Ansprüche 8 bis 10, wobei ein Bit der physischen Adresse als Steuerung des physischen Speichers verwendet wird, wobei der physische Speicher die einem ANN (500) zugeordneten Daten empfängt oder bereitstellt, oder wobei ein Bit der physischen Adresse als Selektor eines Typs eines Multiplexers verwendet wird, wobei eine Ein- oder Ausgabe des Multiplexers ein Bit der Daten aufweist, die einem ANN zugeordnet sind (500).

12. Das System nach einem der Ansprüche 7 bis 11, wobei die Bestimmung der physischen Adresse des physischen Speichers durch die Verarbeitungseinheit (410) basierend auf einem der Folgenden erfolgt: einer Nutzungszählung der Daten in der ANN-Berechnung oder einer Zeitspanne zwischen einem Zeitpunkt, zu dem die Daten in den physischen Speicher geschrieben werden, und einem Zeitpunkt, zu dem die Daten in der ANN-Berechnung verwendet werden.

13. Ein Computerprogramm zum Zwischenspeichern von Daten in Berechnungen eines künstlichen neuronalen Netzwerks (ANN), wobei das Computerprogramm Steuerungsanweisungen umfasst, die, wenn sie von einem oder mehreren Prozessoren (910) eines Computersystems (900), das eine Kommunikationseinheit und eine mit der Kommunikationseinheit gekoppelte Verarbeitungseinheit (410) implementiert, ausgeführt werden, den einen oder die mehreren Prozessoren (910) veranlassen, eines der Verfahren nach den Ansprüchen 1 bis 6 auszuführen.

## Revendications

1.  Procédé pour la mise en mémoire cache de données dans des calculs de réseau de neurones artificiels, ANN, le procédé comprenant :

    la réception, par une unité de communication, de données et d'une adresse logique des données, les données étant associées à l'ANN (500),
    dans lequel l'adresse logique des données est indicative d'un neurone, d'une couche de l'ANN, d'une entrée d'une ou de plusieurs couches (505-535) de l'ANN (500) ou d'un poids des une ou plusieurs couches (505-535) de l'ANN (500) ;
    la détermination, par une unité de traitement (410) couplée à l'unité de communication et à une pluralité de mémoires physiques (425) et sur la base de l'adresse logique et de paramètres physiques des mémoires physiques (425), d'une adresse physique d'une mémoire physique de la pluralité de mémoires physiques (425),
    dans lequel la pluralité de mémoires physiques (425) inclut au moins deux mémoires physiques associées à différents paramètres physiques, les différents paramètres physiques incluant l'un parmi : différentes vitesses d'accès, différentes vitesses de lecture, différentes vitesses d'écriture et différentes latences pour l'opération,
    dans lequel l'unité de traitement (410) est configurée avec une configuration (415) incluant des règles pour le mappage des adresses logiques avec les mémoires physiques (425), dans lequel la configuration (415) de l'unité de traitement (410) est déterminée sur la base d'une structure de l'ANN ; et
    la réalisation, par l'unité de traitement (410), d'une opération associée aux données et à l'adresse physique
    dans lequel l'opération inclut une écriture des données dans la mémoire physique à l'adresse physique.

2.  Procédé selon la revendication 1, dans lequel la détermination de l'adresse physique de la mémoire physique (425) est basée sur un nombre d'utilisations des données dans le calcul de l'ANN.

3.  Procédé selon l'une quelconque des revendications précédentes, dans lequel :

    les mémoires physiques (425) sont associées à des priorités, les priorités étant basées sur des paramètres physiques associés aux mémoires physiques (425) ; et
    l'unité de traitement (410) est configurée pour sélectionner, sur la base d'un ordre des priorités, la mémoire physique parmi la pluralité de mémoires physiques (425), la mémoire physique étant sélectionnée pour réaliser l'opération.

4.  Procédé selon la revendication 3, dans lequel une priorité de la mémoire physique de la pluralité de mémoires physiques (425) est déterminée sur la base d'un laps de temps entre un temps auquel les données sont écrites dans la mémoire physique et un temps auquel les données sont utilisées dans le calcul de l'ANN.

5.  Procédé selon la revendication 3 ou 4, dans lequel les données incluent une séquence d'entrées et l'unité de traitement (410) est configurée pour :

    déterminer qu'une taille des données dépasse une taille de la mémoire physique sélectionnée ; et
    en réponse à la détermination :

    sélectionner une mémoire physique supplémentaire parmi la pluralité de mémoires (425), la mémoire physique supplémentaire étant associée à une priorité supplémentaire, la priorité supplémentaire étant inférieure à une priorité de la mémoire physique sélectionnée ; et
    écrire les entrées provenant de la séquence dans la mémoire physique sélectionnée et dans la mémoire physique supplémentaire.

6.  Procédé selon l'une quelconque des revendications 3 à 5, dans lequel la configuration (415) inclut des informations relatives au mappage des données associées à une ou plusieurs couches (505-535) de l'ANN (500) avec les priorités.

7.  Système pour la mise en mémoire cache de données dans des calculs de réseau de neurones artificiels, ANN, le système comprenant :

    une unité de communication configurée pour recevoir des données et une adresse logique des données, les données étant associées à l'ANN (500) ;
    une pluralité de mémoires physiques (425), les mémoires physiques (425) étant associées à des adresses physiques et à des paramètres physiques, dans lequel la pluralité de mémoires physiques (425) inclut au moins deux mémoires physiques associées à différents paramètres physiques, les différents paramètres physiques incluant l'un parmi : différentes vitesses d'accès, différentes vitesses de lecture, différentes vitesses d'écriture et différentes latences pour l'opération ; et

une unité de traitement (410) couplée à l'unité de communication et à la pluralité de mémoires physiques (425),

dans lequel le système (400) est configuré pour réaliser le procédé selon l'une quelconque des revendications 1 à 6.

8. Système selon la revendication 7, dans lequel l'unité de traitement (410) réside dans l'un parmi : une matrice prédiffusée programmable par l'utilisateur ou un circuit intégré spécifique à une application.

9. Système selon la revendication 8, dans lequel la pluralité de mémoires physiques (425) inclut une mémoire intégrée à l'unité de traitement (410).

10. Système selon la revendication 8 ou 9, dans lequel la pluralité de mémoires physiques (425) inclut une mémoire de stockage externe à l'unité de traitement (410).

11. Système selon l'une quelconque des revendications 8 à 10, dans lequel un bit de l'adresse physique est utilisé comme un contrôle de la mémoire physique, la mémoire physique recevant ou fournissant les données associées à un ANN (500), ou dans lequel un bit de l'adresse physique est utilisé comme un sélecteur d'un type d'un multiplexeur, dans lequel une entrée ou une sortie du multiplexeur inclut un bit des données associées à un ANN (500).

12. Système selon l'une quelconque des revendications 7 à 11,
dans lequel la détermination de l'adresse physique de la mémoire physique par l'unité de traitement (410) est basée sur l'un parmi : un nombre d'utilisations des données dans le calcul de l'ANN ou un laps de temps entre un temps auquel les données sont écrites dans la mémoire physique et un temps auquel les données sont utilisées dans le calcul de l'ANN.

13. Programme d'ordinateur pour la mise en mémoire cache de données dans des calculs de réseau de neurones artificiels, ANN, dans lequel le programme d'ordinateur comprend des instructions de contrôle qui, lorsqu'elles sont exécutées par un ou plusieurs processeurs (910) d'un système informatique (900) qui met en œuvre une unité de communication et une unité de traitement (410) couplée à l'unité de communication, amènent les un ou plusieurs processeurs (910) à réaliser l'un quelconque des procédés selon les revendications 1 à 6.

**FIG. 1**

EP 3 895 024 B1

210

240    250    250    250    250

220

V[1]

V[2]

V[3]

...

y₁

y₂

y₃

...    ...    ...    ...    ...

220

V[1]  W[1]

W[2]

V[2]

W[3]

V[3]

Neuron

O=F(W[1]×V[1] + W[2]×V[2] + W[3]×V[3] ... )

230

F(X)

F(X)=0 when X ≤ 0
F(X) → 0 when X>0 and X → 0

X

**FIG. 2**

300

305 — Neural Network

315 — Training Data

310 — Training

320 — Weights

330 — New Data

325 — Inference

**FIG. 3**

**FIG. 4**

EP 3 895 024 B1

FIG. 5

EP 3 895 024 B1

600

...

$d_n, @_n$

...

$d_2, @_2$

$d_1, @_1$

$d_0, @_0$

Lapse of time

0  $T_0$           $T_1$           $T_m$           $T_k$

$d_0, @_0$     $d_1, @_1$     $d_n, @_n$     $d_1, @_1$

**FIG. 6**

FIG. 7

800

Receive, by a communication unit, data and a logical address of the data, the data being associated with the ANN
802

Determine, by a processing unit coupled to the communication unit and to a plurality of physical memories associated with physical addresses and physical parameters and based on the logical address and the physical parameters of the physical memories, a physical address of a physical memory of the plurality of physical memories
804

Perform, by the processing unit, an operation associated with the data and the physical address
806

FIG. 8

900

990

910 One or more processors

920 Memory

930 Mass Storage

940 Portable Storage

985 Accelerator device(s)

950 One or more output devices

960 One or more Input devices

970 Network Interface

980 One or more peripheral devices

FIG. 9

**EP 3 895 024 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050262323 A1
- US 20130238855 A1